# EUROPÄISCHE PATENTSCHRIFT

(11) **EP 0 804 389 B1**
(45) Veröffentlichungstag und Bekanntmachung des Hinweises auf die Patenterteilung: **18.04.2001**
(21) Anmeldenummer: 96900525.5
(22) Anmeldetag: 18.01.1996
(51) Int. Cl.: C03C 3/076, C03C 21/00

(54) **OPTISCHES GLAS MIT VARIIERENDEM BRECHUNGSINDEX**
OPTICAL GLASS WITH VARYING REFRACTIVE INDEX
VERRE OPTIQUE A INDICE DE REFRACTION VARIABLE

(30) Priorität: 18.01.1995 DE 19501262
(43) Veröffentlichungstag der Anmeldung: 05.11.1997
(73) Patentinhaber: Optische Werke G. Rodenstock, 80469 München (DE)
(72) Erfinder: MOHR, Werner, D-94227 Zwiesel (DE); ILIN, Vladimir, Sankt Petersburg (RU); GOLDENFANG, Boris, Sankt Petersburg (RU); LIFSCHITZ, Vladislav, Sankt Petersburg (RU); REMIZOV, Nikolai, Sankt Petersburg (RU)
(74) Vertreter: Münich, Wilhelm, Dr.
(86) Internationale Anmeldenummer: DE9600068
(87) Internationale Veröffentlichungsnummer: WO9622254

(56) Entgegenhaltungen:
- EP-A- 0 287 345
- BE-A- 665 119
- GB-A- 1 172 503
- CERAMIC BULLETIN, Bd. 49, Nr. 11, 1970, BEDFORD, Seiten 974-977, XP002004312 W.G. FRENCH ET AL.: "refractive index changes produced in glass by ion exchange"
- GLASS PHYSICS AND CHEMISTRY, Bd. 20, Nr. 1, Februar 1994, AL US, Seiten 52-58, XP000461968 V.M. MAKSIMOV ET AL.: "aplanatic radial gradient index lenses produced by li-melt for na-glass ion exchange"
- GLASS PHYSICS AND CHEMISTRY, Bd. 20 , Nr. 4, August 1994, AL US, Seiten 340-344, XP000464130 V.YA.LIVSHITS ET AL.: "elastic and optical properties of alkali titanium tin silicate glasses and changes in the refractive index by ion exchange"
- JOURNAL OF THE CERAMIC SOCIETY OF JAPAN, INTERNATIONAL EDITION, Bd. 102, Nr. 10, Oktober 1994, TOKYO JP, Seiten 900-904, XP000495865 K. FUJII: "selective adsorption of lithium ions from molten salt by activated alumina"
- APPLIED OPTICS, Bd. 25, Nr. 19, 1.Oktober 1986, NEW YORK US, Seiten 3373-3378, XP002013781 S.N. HOUDE-WALTER ET AL.: "delta-n control in GRIN glass by additives in agcl diffusion baths"
- CHEMICAL ABSTRACTS, vol. 112, no. 6, 5.Februar 1990 Columbus, Ohio, US; abstract no. 41316g, Seite 351; XP002013782 & DD,A,269 615 (F. SCHILLER UNIVERSITÄT) 30.September 1985

## Beschreibung

### Technisches Gebiet

Die Erfindung bezieht sich auf ein optisches Glas mit einem Brechungsindex, der als Funktion wenigstens einer Koordinate variiert, das aus einem Ausgangsmaterial mit konstantem Brechungsindex durch Ionenaustausch hergestellt ist.

### Stand der Technik

Optische Gläser mit variierendem Brechungsindex gemäß dem Oberbegriff der nebengeordneten Patentansprüche sind seit langem bekannt. Bei den bekannten optischen Gläsern ist die Variation des Brechungsindex für eine Reihe von Anwendungen, wie beispielsweise Brillengläser, zu gering. Darüberhinaus haben die bekannten durch Ionenaustausch hergestellten Materialien eine vergleichsweise geringe Stabilität in aggressiven Medien, wie sie bereits "Seeluft" darstellt. Damit ist gemeint, daß aggressive Medien zu einer Trübung des Glases und/oder einer ungewollten Variation des Brechungsindex führen können.

In der EP-A-0 278 345 wird die Herstellung eines optischen Glases offenbart, dessen Brechungsindex, wenigstens in einer Koordinate variiert. Es beschreibt den lonenaustausch von Lithium aus dem Glas gegen Alkalimetallionen (bevorzugt Na⁺) in einem Alumosilikatglas, das als weitere wichtige Bestandteile Li₂O, TiO₂, SnO₂ und ZrO₂ enthält. Es wird eine Differenz im Brechungsindex von nur 0,016 erzielt.

Im Gegensatz dazu wird erfindungsgemäß ein Glas verwendet, in dem Lithium im optischen Glas komplett fehlt. In diesem Fall wird Natrium im Glas gegen Lithium im Mutterglas aus dem Saltzbad getauscht. Es wird eine Differenz im Brechungsindex von 0,045 erzielt.

Gemäß dem Stand der Technik laut CERAMIC BULLETIN, Bd. 49, Nr. 11, 1970, Bedford, Seiten 974-977, XP002004312; W.G. FRENCH et al.: "Refractive index changes produced in glass by ion exchange" ist es bekannt, zur Erzielung einer Änderung des Brechungsindex, in einem Natrium-Alumosilikatglas Na⁺ -lonen durch die kleineren Li⁺ -lonen zu ersetzen. Der lonenaustausch wird in einem LiNaSO₄-Gemisch ausgeführt.

Erfindungsgemäß wird der lonenaustausch dagegen nur in Lithiumsalz ausgeführt.

In GLASS PHYSICS UND CHEMISTRY, Bd. 20 Nr. 1, Februar 1994, AL US, Seiten 52-58, XP000461968; V.M.MAKSIMOV et al.: "Aplanatic radial gradient index lenses produced by Li-melt for N-Glass ion exchange" wird der Ersatz von Na⁺ -Ionen in einem Li-Na-Silikat-Glas offenbart. Das Li-Na-Silikat-Glas enthält SiO₂, ZrO₂ und Nb₂O₅. Der lonenaustausch egibt einen positiven Brechungsindexgradienten.

Erfindungsgemäß beherrscht das optische Glas nur SiO₂, TiO₂, SnO₂.

In GLASS PHYSICS AND CHEMISTRY, Bd. 20, Nr. 4, August 1994, AL US, Seiten 340-344, XP000464130; V.Y.LIVSHITS et al.: "Elastic an optical properties of alkali titanium tin silicate glasses and changes in the refractive index by ion exchange" wird der Li-lonen-Austausch in einem Alkali-Titan-Silikat-Glas offenbart, das mit 1 - 3 Mol-% SnO₂ dotiert ist. Die untersuchten Gläser enthalten weitestgehend die in Anspruch 1 angegebenen Bestandteile, jedoch zusätzlich 5 - 20%Li₂O. Der lonenaustausch wird in einer LiCl+Li₂SO₄-Schmelze vorgenommen. Es wird eine Veränderung des Brechungsindex von bis zu 0,03 realisiert.

Erfindungsgemäß fehlt Li₂O in dem optischen Glas komplett.

### Darstellung der Erfindung

Der Erfindung liegt die Aufgabe zugrunde, optische gattungsgemäße optische Gläser derart weiterzubilden, daß sie bei einer beispielsweise für ophthalmologische Anwendungen ausreichenden Stabilität eine Variation des Brechungsindex von wenigstens 0,045 aufweisen.

Eine erfindungsgemäße Lösung dieser Aufgabe ist in den nebengeordneten Patentansprüchen angegeben. Weiterbildungen der Erfindung sind Gegenstand der abhängigen Ansprüche.

Gemäß Anspruch 1 wird das optische Glas dadurch erhalten, daß das Ausgangsmaterial die folgenden Materialien

| | |
|---|---|
| SiO₂ | 56 Gew.% ± 5 Gew.% |
| Na₂ 0 | 23,5 Gew.% ± 2 Gew.% |
| TiO₂ | 17 Gew.% ± 2 Gew.% |
| SnO₂ | 4,5 Gew.% ± 2,5 Gew.% |
| Sb₂ 0₃ | 0,01...0,7 Gew.% |
| NaCl | 0,05...1 Gew.% |

enthält, und daß der Ionenaustausch in einer Lithiumschmelze erfolgt ist.

Durch die Zusammensetzung des ursprünglichen optischen Glases, sowie die der Schmelze wird ein lonenaustausch verwirklicht, der eine Änderung des Brechungsindex von mehr als 0,045 (also mehr als das 1,5-Fache von 0,03) ermöglicht. Für die Erfindung ist diese Änderung eine der wichtigsten Charakteristiken des Gradientenglases, die sich deutlich vom Stand der Technik unterscheidet.

Weiterbildungen sind Gegenstand der Ansprüche 2 und 3:

Bei den erfindungsgemäßen Materialien kann nicht nur die Variation des Brechungsindex ca. 0,1 betragen, sondern der Brechungsindex kann auch über einen Bereich von ca. 10 mm von den Begrenzungsflächen variieren.

In den Ansprüchen 4 bis 6 sind Verfahren zur Herstellung der erfindungsgemäßen optischen Gläser angegeben:

Im Anspruch 4 ist ein Verfahren zur Variation des Brechungsindex, bei dem ein Ionenaustausch des Ausgangsmaterials in einer Salzschmelze erfolgt, gekennzeichnet, bei dem bei einem Ausgangsmaterial gemäß Anspruch 1 die Lithiumschmelze aus Li₂MoO₄ oder Li₂CrO₄ und/oder Li₂SO₄ besteht.

Dabei kann das Molverhältnis zwischen Li₂MoO₄ bzw. Li₂CrO₄ und Li₂SO₄ ca 1:2 betragen.

Die Verwendung des im Anspruch 6 angegebenen Al₂ O₃-Tiegels, in dem der Ionenaustausch ausgeführt wird, hat den Vorteil, daß das Glas nicht mit Tiegelmaterial kontamininert wird.

Auch hinsichtlich der besonders guten Stabilität werden erfindungsgemäß ein optisches Glas und ein Verfahren zur dessen Herstellung bereitgestellt, welche sich vom Stand der Technik folgendermaßen unterscheiden:

Das Glas kristallisiert nicht während der gesamten Zeit des lonenaustauschprozesses bei allen Temperaturen. Es kristallisiert auch nicht nach dem Tempern des Glases nach dem lonenaustausch. Die Tatsache, daß das Glas nicht kristallisiert, liegt daran, daß in dem erfindungsgemäßen Mutterglas von Anfang an kein Lithium vorhanden ist. Dagegen exisitiert in der GLASS PHYSICS AND CHEMISTRY, Bd. 20, Nr. 4, August 1994, im Glas von Anfang an Lithium. Dies ist ein wesentlicher Unterschied zum Stand der Technik

Das erfindungsgemäße Mutterglas ist kein Laborglas, sondern wurde auch im technischen Betrieb geschmolzen. Aus diesem Glas mit dem Durchmesser 70mm und einer Dicke von 20mm wurden Gradienten durch lonenaustausch erstellt. Die Eindringtiefe des axialen Gradienten beträgt 5mm von beiden Seiten (d.h. von der Bodenfläche bis zur Deckfläche). Diese Proben sind mechanisch stabil und es treten keine Risse auf. Es gelang, aus diesen Proben 2 Brillengläser mit Gradienten zu erstellen.

Die erfindungsgemäßen Gläser kristallisieren während des lonenaustausch nicht, sie zerreissen mechanisch nicht und haben eine hohe Transparenz. Aufgrund dieser Eigenschaften können aus diesen Gläsern Gradientenbrillengläser hergestellt werde, die einen axialen Gradienten und eine Änderung bzw. Differenz des Index von mehr als 0,045 aufweisen.

Die spezielle Zusammensetzungen des ursprünglichen Mutterglases und der Schmelze für den lonenaustausch wurden anhand von experimentellen Untersuchungen ermittelt und optimiert. Sie sind für den Fachmann nicht naheliegend, vor allem, weil dem Austausch von Lithium aus dem Mutterglas nicht gefolgt wurde, was dem nächstliegenden Stand der Technik entspricht. Das erfinderische liegt in der Optimierung einer hohen Änderung des Brechungsindexes bei erhöhter Stabilität gegenüber herkömmlichen Gläsern.

Vorstehend ist die Erfindung anhand der Angaben in den Ansprüchen beschrieben worden. Durch die erfindungsgemäßen Zusammensetzungen und darauf abgestimmte Ionenaustauschbäder werden größere Indexgradienten als beim Stand der Technik erzielt.

Darüberhinaus wird die Stabilität der Gläser erhöht.

## Patentansprüche

1. Optisches Glas mit einem Brechungsindex, der als Funktion wenigstens einer Koordinate variiert, das aus einem Ausgangsmaterial mit konstantem Brechungsindex durch Ionenaustausch hergestellt ist,
dadurch **gekennzeichnet,** daß das Ausgangsmaterial die folgenden Materialien
| | |
|---|---|
| SiO₂ | 56 Gew.% ± 5 Gew.% |
| Na₂ 0 | 23,5 Gew.% ± 2 Gew.% |
| TiO₂ | 17 Gew.% ± 2 Gew.% |
| SnO₂ | 4,5 Gew.% ± 2,5 Gew.% |
| Sb₂ 0₃ | 0,01...0,7 Gew.% |
| NaCl | 0,05...1 Gew.% |
enthält, und
daß der Ionenaustausch in einer Lithiumschmelze erfolgt ist.

2. Glas nach Anspruch 1,
dadurch **gekennzeichnet,** daß die Variation des Brechungsindex ca. 0,1 beträgt.

3. Glas nach Anspruch 2,
dadurch **gekennzeichnet,** daß der Brechungsindex über einen Bereich von ca 10 mm von den Begrenzungsflächen variiert.

4. Verfahren zur Variation des Brechungsindex, bei dem ein Ionenaustausch des Ausgangsmaterials in einer Salzschmelze erfolgt,
dadurch **gekennzeichnet,** daß bei einem Ausgangsmaterial gemäß Anspruch 1 die Lithiumschmelze aus Li₂ MoO₄ oder Li₂ CrO₄ und/oder Li₂ SO₄ besteht.

5. Verfahren nach Anspruch 4,
dadurch **gekennzeichnet,** daß das Molverhältnis zwischen Li₂ MoO₄ bzw. Li₂ CrO₄ und Li₂ SO₄ ca 1:2 beträgt.

6. Verfahren nach einem der Ansprüche 4 oder 5,
dadurch **gekennzeichnet,** daß der Ionenaustausch in einem Al₂ O₃-Tiegel ausgeführt wird.

## Claims

1. Optical glass with a refractive index which varies as a function of a least one coordinate, which glass is produced from a starting material with a constant refractive index by means of ion exchange,
characterised in that the starting material contains the following materials
| | |
|---|---|
| SiO₂ | 56 % by weight ± 5 % by weight |
| Na₂O | 23.5 % by weight ± 2 % by weight |
| TiO₂ | 17 % by weight ± 2 % by weight |
| SnO₂ | 4.5 % by weight ± 2.5 % by weight |
| Sb₂O₃ | 0.01....0.7 % by weight |
| NaCl | 0.05....1 % by weight |
and in that
the ion exchange is effected in molten lithium.

2. Glass according to claim 1,
characterised in that the variation of the refractive index is approx. 0.1.

3. Glass according to claim 2,
characterised in that the refractive index varies over a range of approx. 10 mm of the boundary surfaces.

4. Method for variation of the refractive index, in which an ion exchange of the starting material takes place in a molten salt,
characterised in that, in the case of a starting material according to claim 1, the molten lithium comprises Li₂MoO₄ or Li₂CrO₄ and/or Li₂SO₄.

5. Method according to claim 4,
characterised in that the mol ratio between Li₂MoO₄ or Li₂CrO₄ and Li₂SO₄ is approx. 1 : 2.

6. Method according to one of the claims 4 or 5,
characterised in that the ion exchange is performed in an Al₂O₃ crucible.

## Revendications

1. Verre optique avec un indice de réfraction qui varie en fonction d'au moins une coordonnée, qui est fabriqué par échange d'ions à partir d'une matière de base ayant un indice de réfraction constant, caractérisé en ce que la matière de base comprend les matières suivantes :
| | |
|---|---|
| SiO₂ | 56 % poids ± 5 % poids |
| Na₂O | 23,5 % poids ± 2 % poids |
| TiO₂ | 17 % poids ± 2 % poids |
| SnO₂ | 4,5 % poids ± 2,5 % poids |
| Sb₂O₃ | 0,01...0,7 % poids |
| NaCl | 0,005...1 % poids |
et en ce que l'échange d'ions se produit dans du lithium fondu.

2. Verre selon la revendication 1, caractérisé en ce que la variation de l'indice de réfraction s'élève environ à 0,1.

3. Verre selon la revendication 2, caractérisé en ce que l'indice de réfraction varie sur une plage d'environ 10 mm par rapport aux surfaces de délimitation.

4. Procédé de variation de l'indice de réfraction, dans lequel un échange d'ions de la matière de base se produit dans des sels fondus, caractérisé en ce que le lithium fondu pour une matière de base selon la revendication 1 est composée de Li₂MoO₄ ou Li₂CrO₄ et /ou Li₂SO₄.

5. Procédé selon la revendication 4, caractérisé en ce que le rapport molaire entre Li₂MoO₄ ou Li₂CrO₄ et Li₂SO₄ s'élève à environ 1/2.

6. Procédé selon l'une des revendications 4 ou 5, caractérisé en ce que l'échange d'ions est réalisé dans un creuset en Al₂O₃.
